# EUROPÄISCHE PATENTANMELDUNG

(11) **EP 3 793 107 A1**
(43) Veröffentlichungstag der Anmeldung: **17.03.2021**
(21) Anmeldenummer: 19197245.4
(22) Anmeldetag: 13.09.2019
(51) Int. Cl.: H04J 3/06, G05B 19/042, H04L 12/24, H04L 12/26, B60W 50/02, H04W 56/00

(54) **VERFAHREN ZUM FUNKTIONAL SICHEREN AUSSENDEN EINES BROADCAST-TELEGRAMMS UND AUTOMATISIERUNGSSYSTEM**

(71) Anmelder: Siemens Aktiengesellschaft, 80333 München (DE)
(72) Erfinder: Barthel, Herbert, 91074 Herzogenaurach (DE); Walter, Maximilian, 90408 Nürnberg (DE); Hubert, Johannes, 90559 Burgthann (DE); Meyer, Thomas Markus, 90475 Nürnberg (DE)

(57) **Zusammenfassung**

Die Erfindung betrifft ein Verfahren zum funktional sicheren Aussenden und Empfangen eines Broadcast-Telegramms (T_{BC}) mit sicherheitsrelevanten Daten (Safe_{Data}), wobei das Broadcast-Telegramm (T_{BC}) von einem Sender (S) ausgesendet wird und von mehreren Empfängern (E1,E2) empfangen wird, wobei ein Uhrzeitmaster (UM) mit einer Master-Uhr (MUhr) betrieben wird und dem Sender (S) zyklisch ein Synchronisations-Telegramm (T_{ZS}) mit der aktuellen Uhrzeit (AKT) der Master-Uhr (MUhr) zusendet, wodurch eine Sender-Uhr (SUhr) des Senders (S) mit der Master-Uhr (MUhr) synchronisiert wird, wobei die Empfänger (E1,E2) vom Uhrzeitmaster (UM) mittels eines Anfrage-Telegramms (T_{A1}, T_{A1}) ein Uhrzeit-Telegramm (Tₐₖₜ) mit der aktuellen Uhrzeit (AKT) der Master-Uhr (MUhr) anfordern, wobei mit dem Aussenden des Anfrage-Telegramms (T_{A1},T_{A1}) ein Zeitzähler (Z1,Z2) gestartet wird, mit welchen eine Verzögerungszeit (D1,D2) ermittelt wird, wenn das angefragte Uhrzeit-Telegramm (Tₐₖₜ) in dem Empfänger (E1,E2) eintrifft, wobei mit der aktuellen Uhrzeit (AKT) der Master-Uhr (MUhr) zuzüglich der Verzögerungszeit (D1,D2) eine Empfänger-Uhr (EUhr1, EUhr2) eingestellt bzw. synchronisiert wird, wobei dem Broadcast-Telegramm (T_{BC}) beim Aussenden des Broadcast-Telegramms (T_{BC}) mittels der Sender-Uhr (SUhr) ein Sende-Zeitpunkt (t_{send}) hinzugefügt wird, und beim Eintreffen in dem Empfänger (E1,E2) ein Empfangs-Zeitpunkt (t_{receive}) ermittelt wird, wobei der Empfänger (E1,E2) die sicherheitsrelevanten Daten (Safe_{Da-ta}) als gültige Daten übernimmt, wenn eine Differenz zwischen dem Empfangs-Zeitpunkt (t_{receive}) und dem Sende-Zeitpunkt (t_{send}) einen vorgebbaren Grenzwert (ΔD) nicht überschritten hat.

## Beschreibung

Die Erfindung betrifft ein Verfahren zum funktional sicheren Aussenden und Empfangen eines Broadcast-Telegramms mit sicherheitsrelevanten Daten, wobei das Broadcast-Telegramm von einem Sender ausgesendet wird und von mehreren Empfängern empfangen wird, wobei ein Uhrzeit-Master mit einer Master-Uhr betrieben wird und dem Sender zyklisch ein Synchronisations-Telegramm mit der aktuellen Uhrzeit der Master-Uhr zusendet, wodurch eine Sender-Uhr des Senders mit der Master-Uhr synchronisiert wird.

Auch betrifft die Erfindung ein Automatisierungssystem zum funktional sicheren Aussenden und Empfangen eines Broadcast-Telegramms mit sicherheitsrelevanten Daten, umfassend einen Sender mit einer Sender-Uhr, mehrere Empfänger mit jeweils einer Empfänger-Uhr, einen Uhrzeit-Master mit einer Master-Uhr, welcher ausgestaltet ist, dem Sender zyklisch einen Synchronisations-Telegramm mit der aktuellen Uhrzeit zu senden, die Sender-Uhr des Senders ist ausgestaltet, sich anhand der aktuellen Uhrzeit mit der Master-Uhr zu synchronisieren, weiterhin ist der Sender ausgestaltet, das Broadcast-Telegramm an die Empfänger zu senden, die Empfänger sind ausgestaltet von dem Uhrzeit-Master mittels eines Anfrage-Telegramms die aktuelle Uhrzeit anzufordern, der Uhrzeit-Master ist ausgestaltet auf die Anfrage-Telegramme die aktuelle Uhrzeit mit einem Uhrzeit-Telegramm an die Empfänger zu senden.

Bei einem funktional sicheren Aussenden und Empfangen von Telegrammen spricht man auch von einer fehlersicheren Kommunikation, welche auch als F-Kommunikation in der Automatisierungstechnik bezeichnet wird. Eine fehlersichere Kommunikation wird insbesondere bei sicherheitsrelevanten Anwendungen eingesetzt, insbesondere dann, wenn Fehler in der Kommunikation zur Gefährdung von Menschen, Tieren oder Sachwerten führen können. Eine sicherheitsgerichtete Kommunikation über Profisafe in einer Punkt-zu-Punkt-Verbindung ist bekannt. Da es aber in der fortschreitenden Kommunikationstechnik auch Konzepte, wie z.B. Publisher/Subscriber-, Broadcast- oder Multicast-Mechanismen gibt, die mit einer Punkt-zu-Punkt-Verbindung nicht hinreichend unterstützt werden können, ist hier eine Lösung gesucht.

Für das eingangs genannte Verfahren sieht eine Lösung vor, dass die Empfänger vom Uhrzeit-Master mittels eines Anfrage-Telegramms ein Uhrzeit-Telegramm mit der aktuellen Uhrzeit der Master-Uhr anfordern, wobei mit dem Aussenden des Anfrage-Telegramms ein Zeitzähler gestartet wird, mit welchem eine Verzögerungszeit ermittelt wird, wenn das angefragte Uhrzeit-Telegramm wieder in dem Empfänger eintrifft, wobei mit der aktuellen Uhrzeit der Master-Uhr zuzüglich der Verzögerungszeit eine Empfänger-Uhr eingestellt bzw. synchronisiert wird, wobei dem Broadcast-Telegramm beim Aussenden des Broadcast-Telegramms mittels der Sender-Uhr ein Sende-Zeitpunkt hinzugefügt wird, und beim Eintreffen in den Empfänger ein Empfangs-Zeitpunkt ermittelt wird, wobei der Empfänger die sicherheitsrelevanten Daten als gültige Daten übernimmt, wenn eine Differenz zwischen den Empfangs-Zeitpunkt und dem Sende-Zeitpunkt einen vorgegebenen Grenzwert nicht überschritten hat.

Eine Synchronisation zwischen einem Master und einem Sender wird dadurch sichergestellt, dass der Master seine Uhrzeit in regelmäßigen Abständen (z.B. einmal pro Minute) zum Sender versendet. Der Sender ersetzt den Wert seiner lokalen Uhr durch den empfangenen Wert. Da das Versenden des Wertes Zeit benötigt, geht die Uhr des Senders immer etwas nach. Es gilt also die Uhrzeit des Senders ist kleiner gleich die Uhrzeit des Masters. Eine Synchronisation zwischen dem Master und den Empfängern erfolgt jeweils auf Initiative der Empfänger, diese fordern vom Master die aktuelle Uhrzeit der Master-Uhr an. Zusätzlich messen die Empfänger jeweils die Zeit "Delta", die diese Anfrage inklusive einer Antwort benötigt. Anschließend wird die lokale Uhr den Empfänger auf den Wert der Uhrzeit des Masters zuzüglich dem ermittelten Delta gesetzt. Da das "Delta" den Hin- und Rückweg der Anfrage enthält, ist der Wert mindestens so groß wie die Dauer des Rückwegs alleine. Daher geht eine Empfänger-Uhr für alle Empfänger immer etwas vor, es gilt die Uhrzeit des Masters ist ≤ die Uhrzeit der Empfänger.

Den eigentlichen Broadcast-Telegrammen mit den sicheren Daten fügt der Sender seine lokale Uhrzeit hinzu. Die Empfänger berechnen dann die vermutete Dauer der Nachrichtenübertragung mittels eines Sende-Zeitpunktes abzüglich eines Empfangs-Zeitpunktes. Anschließend kann anhand der Verzögerungszeit geprüft werden, ob die empfangene Nachricht das Kriterium der Rechtzeitigkeit erfüllt oder nicht erfüllt.

So kann ein sicherer Broadcast-Sender unbegrenzt viele Broadcast-Empfänger bedienen. Der sichere Broadcast-Sender kann sehr einfach aufgebaut sein, da es genügt, dass seine funktional sicheren Daten zusammen mit der aus seiner Sicht aktuellen Uhrzeit per Broadcast zu beliebigen Empfängern zu senden ist. Im Gegensatz zu bisherigen Lösungen müssen keine Synchronisations-Telegramme von den Broadcast-Empfängern verarbeitet werden.

Um sicher zu stellen, dass eine Anfrage und eine Antwort zusammen gehören, wird in den Empfängern dem Anfrage-Telegramm ein Authentizitätscode zugefügt, welcher vom Uhrzeit-Master in das gesendete Uhrzeit-Telegramm mit übernommen wird, wodurch sichergesellt wird, dass das empfangene Uhrzeit-Telegramm zu dem entsprechenden Anfrage-Telegramm gehört.

Besonders vorteilhaft wird das Verfahren in einer sicheren Anwendung in Notaus-Kreisen verwendet, wobei sich eine Mehrzahl an Empfängern mittels eines Senders und einem Broadcast-Telegramm in einen sicheren Zustand versetzen lassen.

In Bezug auf AGV's (Automatic Guided Vehicles) wird das Verfahren mit Vorteil zur Abschaltung von mobilen Automatisierungseinheiten, welche über eine sichere Funkstrecke betrieben werden, verwendet.

Auch wird die eingangs genannte Aufgabe durch ein Automatisierungssystem gelöst, bei welchem die Empfänger derart ausgestaltet sind, das mit dem Aussenden des Anfrage-Telegramms ein Zeitzähler gestartet wird, und bei Eintreffen des angeforderten Uhrzeit-Telegramms der Zeitzähler gestoppt wird und somit eine Verzögerungszeit ermittelt wird, wenn das angefragte Uhrzeit-Telegramm in dem Empfänger eintrifft, weiterhin sind die Empfänger ausgestaltet, eine Empfänger-Uhr mit der Summe aus der aktuellen Uhrzeit der Master-Uhr und der ermittelten Verzögerungszeit einzustellen bzw. zu synchronisieren, dabei ist der Sender weiterhin dazu ausgestaltet, mit dem Aussenden des Broadcast-Telegramms diesem einen Sendezeitpunkt hinzuzufügen und die Empfänger sind derart ausgestaltet, mit dem Empfang des Broadcast-Telegramms einen Empfangszeitpunkt zu generieren, weiterhin weisen die Empfänger ein Mittel auf, welches ausgestaltet ist, die sicherheitsrelevanten Daten als gültige Daten zu übernehmen, wenn eine Differenz zwischen dem Empfänger-Zeitpunkt und dem Sende-Zeitpunkt einen vorgebbaren Grenzwert nicht überschritten hat.

In einer weiteren Ausgestaltung des Automatisierungssystem ist vorgesehen, in den Empfängern ein Identifikationsmittel zu integrieren, dabei ist das Identifikationsmittel ausgestaltet, dem Anfrage-Telegramm ein Authentizitätscode zuzufügen, welcher vom Uhrzeit-Master in das gesendete Uhrzeit-Telegramm mit übernommen wird, und das Identifikationsmittel ist weiterhin ausgestaltet, anhand des Authentizitätscodes zu prüfen, ob das empfangene Uhrzeit-Telegramm zu dem entsprechenden Anfrage-Telegramm gehört.

In einer weiteren Ausgestaltung des Automatisierungssystems weist dieses, einen Notaus-Kreis auf, wodurch sich die Mehrzahl an Empfängern mittels des Senders und einen Broadcast-Telegramm in einen sicheren Zustand versetzen lassen.

Dabei ist es vorteilhaft, wenn das Automatisierungssystem zur Abschaltung von mobilen Automatisierungseinheiten über eine sichere Funkstrecke betrieben werden.

Die Zeichnung zeigt ein Ausführungsbeispiel der Erfindung, dabei zeigen die
- FIG 1: ein Prinzipbild des Übermittelns von Anfrage- und Zeit-Telegrammen für einen Sender und mehrere Empfänger im Broadcast-Verfahren,
- FIG 2: den Aufbau eines Broadcast-Telegramms,
- FIG 3: ein Empfänger gemäß FIG 1 in einer detaillierteren Darstellung und
- FIG 4: ein Notaus-Kreissystem für mobile Automatisierungseinheiten.

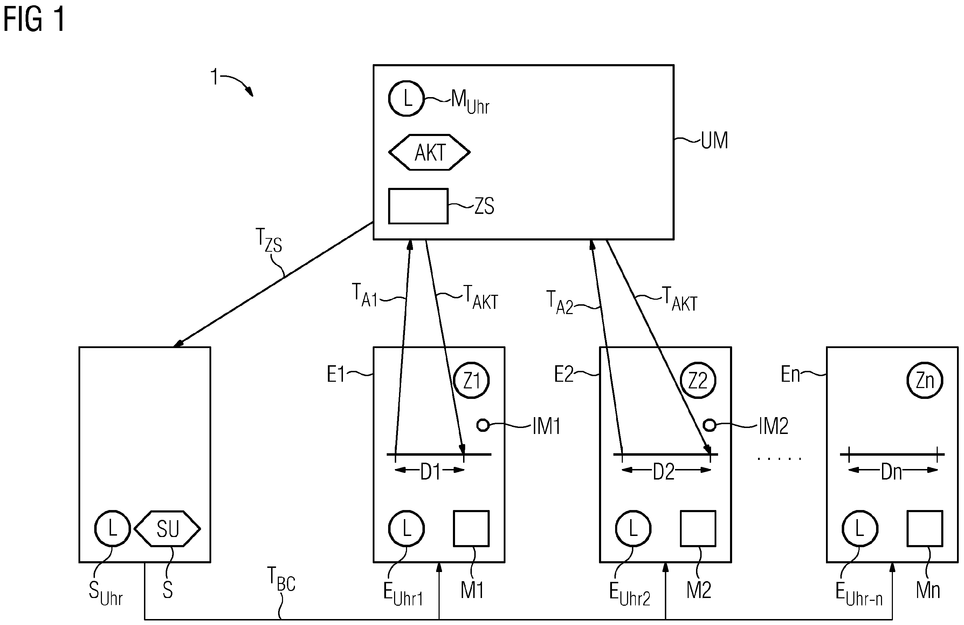

Gemäß FIG 1 ist ein Automatisierungssystem 1 zum funktional sicheren Aussenden und Empfangen eines Broadcast-Telegramms T_{BC} mit sicherheitsrelevanten Daten Safe_{Data} dargestellt. Ein Sender S sendet in diesem Fall ein Broadcast-Telegramm T_{BC} für einen ersten Empfänger E1, einen zweiten Empfänger E2 bis hin zu einem n-ten Empfänger En aus. Der Sender S wird mit einer Sender-Uhr SUhr betrieben, die Empfänger E1,E2 bis En werden jeweils mit einer Empfänger-Uhr EUhr1, EUhr2 bzw. EUhrn betrieben. Dem Sender S und den Empfängern E1,E2 bis En ist ein Uhzeit-Master UM mit einer Master-Uhr MUhr übergeordnet. Der Uhrzeit-Master UM stellt mit Hilfe seiner Master-Uhr MUhr eine aktuelle Uhrzeit AKT bereit und ist dazu ausgestaltet, mittels eines zyklischen Senders ZS zyklisch ein Synchronisations-Telegramm T_{ZS} mit der aktuellen Uhrzeit AKT zu senden. Der Sender S ist dazu ausgestaltet, die aktuelle Uhrzeit in dem Synchronisations-Telegramm T_{ZS} zu empfangen, wobei die Sender-Uhr des Senders S ausgestaltet ist, sich anhand der aktuellen Uhrzeit AKT mit der Master-Uhr MUhr zu synchronisieren. Der Sender S ist dazu ausgestaltet, das Broadcast-Telegramm T_{BC} an die Empfänger E1,E2,...,En zu senden.

Damit sich die Empfänger E1,E2,...,En mit dem Uhrzeit-Master UM bzw. dessen Master-Uhr MUhr synchronisieren können, sind diese dazu ausgestaltet, von dem Uhrzeit-Master UM mittels eines Anfrage-Telegramms T_{A1},T_{A2} die aktuelle Uhrzeit AKT anzufordern. Dabei ist der Uhrzeit-Master UM dazu ausgestaltet, auf die Anfrage-Telegramme T_{A1},T_{A2} als Antwort die aktuelle Uhrzeit AKT mit einem Uhrzeit-Telegramm T_{AKT} an die Empfänger E1,E2,...,En zu senden.

Damit nun nicht unnötig Synchronisations-Telegramme T_{ZS} von dem Broadcast-Empfängern zu verarbeiten und hin und her zu senden sind und auch entsprechend viele und auch entsprechend quasi unzählig viele Broadcast-Empfänger vorhanden sein können, sind die Empfänger E1,E2,...,En derart ausgestaltet, dass mit dem Aussenden ihres jeweiligen Anfrage-Telegramms T_{A1},T_{A2} ein entsprechender Zeitzähler Z1,Z2,...,Zn in ihnen gestartet wird. Dazu weist der erste Empfänger E1 einen ersten Zeitzähler Z1, der zweite Empfänger E2 einen zweiten Zeitzähler Z2 und der n-te Empfänger En entsprechend einen n-ten Zeitzähler Zn auf.

Sendet der erste Empfänger E1 ein erstes Anfrage-Telegramm T_{A1} an den Uhrzeit-Master UM so bekommt der erste Empfänger E1 als Antwort ein Uhrzeit-Telegramm T_{AKT} mit der aktuellen Uhrzeit AKT der Master-Uhr MUhr zurückgesendet. Beim Aussenden des ersten Anfrage-Telegramms T_{A1} hat der erste Empfänger E1 seinen ersten Zeitzähler Z1 gestartet und beim Empfangen des Uhrzeit-Telegramms T_{AKT} wird der Zeitzähler Z1 gestoppt und es ergibt sich eine erste Verzögerungszeit D1. Entsprechend ergibt sich bei dem zweiten Empfänger E2 durch Aussenden eines zweiten Anfrage-Telegramms T_{A2} und empfangen eines darauf geantworteten Uhrzeit-Telegramms T_{AKT} eine zweite Verzögerungszeit D2.

Die Empfänger E1,E2,...,En sind dazu ausgestaltet, mit dem Empfang des Broadcast-Telegramms T_{BC} einen Empfangs-Zeitpunkt t_{recieve} zu generieren. Analog dazu ist der Sender S weiterhin dazu ausgestaltet, mit dem Aussenden des Broadcast-Telegramms T_{BC} diesem einen Sendezeitpunkt t_{send} hinzuzufügen.

Um nun in den Empfängern E1, E2,...,En zu berechnen, ob die empfangene Broadcast-Nachricht das Kriterium der Rechtzeitigkeit erfüllt oder nicht, sind Mittel M1,M2,...,Mn vorhanden, welche ausgestaltet sind, die sicherheitsrelevanten Daten Safe_{Data} als gültige Daten zu übernehmen, wenn eine Differenz zwischen dem Empfangs-Zeitpunkt t_{receive} und dem Sende-Zeitpunkt t_{send} einen vorgebbaren Grenzwert Ωt nicht überschritten hat.

Das Broadcast-Telegramms T_{BC} enthält dementsprechend die sicherheitsrelevanten Daten Safe_{Data} und die Sende-Uhrzeit SUhr der Sender-Uhr SUhr des Senders S und den entsprechenden Sendezeitpunkt t_{send}. Dieses Broadcast-Telegramms T_{BC} kommt an allen Empfängern quasi gleichzeitig an.

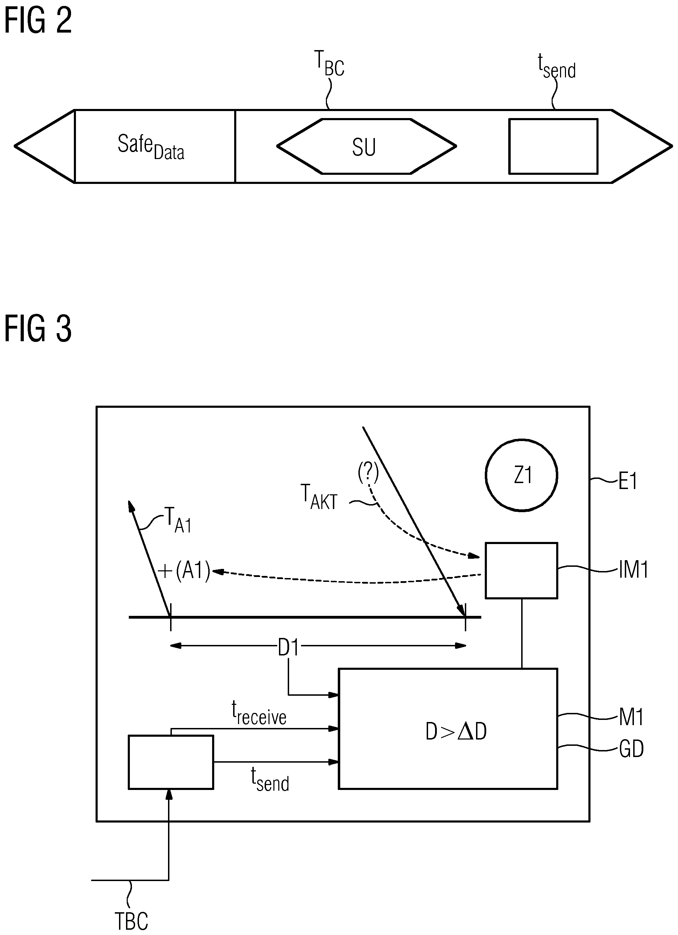

Die FIG 3 zeigt noch einmal in einer Detaildarstellung, wie in einem Empfänger aus der Uhrzeit im Sender S, nämlich aus der Sende-Uhrzeit SU in Form eines Sende-Zeitpunkts t_{send} und dem Empfangs-Zeitpunkt t_{receive} ein Signal für gültige Daten GD anhand des Mittels M1 bereitgestellt wird. Mit dem Aussenden des ersten Anfrage-Telegramms T_{A1} wird der Zeitzähler Z1 gestartet und mit dem Empfang des Uhrzeit-Telegramms T_{AKT} vom Uhrzeit-Master UM wird der Zeitzähler Z1 wieder gestoppt und dadurch ergibt sich die erste Verzögerungszeit D1.

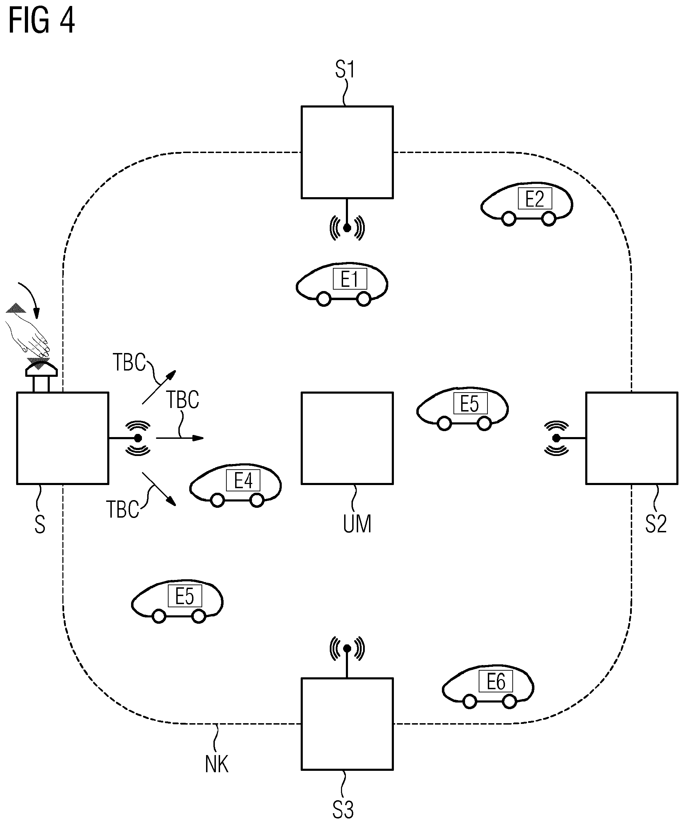

Gemäß FIG 4 ist beispielhaft ein Automatisierungssystem mit einem Notaus-Kreis NK dargestellt. Ein Sender S hat beispielsweise einen Notaus-Schalter welcher durch eine Bedienperson bedient werden kann, so dann sendet der Sender S ein Broadcast-Telegramms T_{BC}, vorzugsweise an mehrere Untersender S1,S2,S3 aus, welche wiederum ein zusätzliches Broadcast-Telegramm T_{BC} für mobile Automatisierungseinheiten generieren. Mit Hilfe des gleichzeitigen Aussendens eines Broadcast-Telegramm T_{BC} mit sicherheitsrelevanten Daten können die mobilen Automatisierungseinheiten sicher in einen Stopp-Zustand versetzt werden.

Um festzustellen, ob das jeweils empfangene Uhrzeit-Telegramm TAKT auch zu dem entsprechenden Anfrage-Telegramm T_{A1} gehört ist gemäß FIG 3 in dem Empfänger E1 ein Identifikationsmittel integriert, welches dem Anfrage-Telegramm T_{A1} ein Authentizitätscode A1 zufügt, welcher vom Uhrzeitmaster UM in das gesendete Uhrzeit-Telegramm T_{AKT} mit übernommen wird, und das Identifikationsmittel IM1 ist ausgestaltet, anhand des Authentizitätscodes A1 zu prüfen, ob das empfangene Uhrzeit-Telegramm T_{AKT} zu dem entsprechenden Anfrage-Telegramm T_{A1} gehört.

## Patentansprüche

1. Verfahren zum funktional sicheren Aussenden und Empfangen eines Broadcast-Telegramms (T_{BC}) mit sicherheitsrelevanten Daten (Safe_{Data}), wobei das Broadcast-Telegramm (T_{BC}) von einem Sender (S) ausgesendet wird und von mehreren Empfängern (E1,E2) empfangen wird, wobei ein Uhrzeitmaster (UM) mit einer Master-Uhr (MUhr) betrieben wird und dem Sender (S) zyklisch ein Synchronisations-Telegramm (T_{ZS}) mit der aktuellen Uhrzeit (AKT) der Master-Uhr (MUhr) zusendet, wodurch eine Sender-Uhr (SUhr) des Senders (S) mit der Master-Uhr (MUhr) synchronisiert wird,
**dadurch gekennzeichnet, dass**
die Empfänger (E1,E2) vom Uhrzeitmaster (UM) mittels eines Anfrage-Telegramms (T_{A1},T_{A1}) ein Uhrzeit-Telegramm (Tₐₖₜ) mit der aktuellen Uhrzeit (AKT) der Master-Uhr (MUhr) anfordern, wobei mit dem Aussenden des Anfrage-Telegramms (T_{A1},T_{A1}) ein Zeitzähler (Z1,Z2) gestartet wird, mit welchen eine Verzögerungszeit (D1,D2) ermittelt wird, wenn das angefragte Uhrzeit-Telegramm (Tₐₖₜ) in dem Empfänger (E1,E2) eintrifft, wobei mit der aktuellen Uhrzeit (AKT) der Master-Uhr (MUhr) zuzüglich der Verzögerungszeit (D1,D2) eine Empfänger-Uhr (EUhr1, EUhr2) eingestellt bzw. synchronisiert wird, wobei dem Broadcast-Telegramm (T_{BC}) beim Aussenden des Broadcast-Telegramms (T_{BC}) mittels der Sender-Uhr (SUhr) ein SendeZeitpunkt (t_{send}) hinzugefügt wird, und beim Eintreffen in dem Empfänger (E1,E2) ein Empfangs-Zeitpunkt (t_{receive}) ermittelt wird, wobei der Empfänger (E1,E2) die sicherheitsrelevanten Daten (Safe_{Data}) als gültige Daten übernimmt, wenn eine Differenz zwischen dem Empfangs-Zeitpunkt (t_{receive}) und dem Sende-Zeitpunkt (t_{send}) einen vorgebbaren Grenzwert (ΔD) nicht überschritten hat.

2. Verfahren nach Anspruch 1, wobei in den Empfängern (E1,E2) dem Anfrage-Telegramm (T_{A1},T_{A1}) ein Authentizitätscode (A1,A2) zugefügt wird, welcher vom Uhrzeitmaster (UM) in das gesendete Uhrzeit-Telegramm (Tₐₖₜ) mit übernommen wird, wodurch sichergestellt wird, dass das empfangene Uhrzeit-Telegramm (Tₐₖₜ) zu dem entsprechenden Anfrage-Telegramm (T_{A1},T_{A1}) gehört.

3. Verfahren nach Anspruch 1 oder 2,
zur sicheren Anwendung in Notaus-Kreisen, wobei sich eine Mehrzahl an Empfängern (E1,E2) mittels eines Senders (S) und einem Broadcast-Telegramm (T_{BC}) in einen sicheren Zustand versetzt werden.

4. Verfahren nach Anspruch 3, zur Abschaltung von mobilen Automatisierungseinheiten, welche über eine sichere Funkstrecke betrieben werden.

5. Automatisierungssystem (1) zum funktional sicheren Aussenden und Empfangen eines Broadcast-Telegramms (T_{BC}) mit sicherheitsrelevanten Daten (Safe_{Data}), umfassend
- einen Sender (S) mit einer Sender-Uhr (SUhr),
- mehrere Empfänger (E1,E2) mit jeweils einer Empfänger-Uhr (EUhr1, EUhr2),
- einen Uhrzeitmaster (UM) mit einer Master-Uhr (MUhr), welcher ausgestaltet ist, dem Sender (S) zyklisch ein Synchronisations-Telegramm (T_{ZS}) mit der aktuellen Uhrzeit (AKT) zu senden,
die Sender-Uhr (SUhr) des Senders (S) ist ausgestaltet, sich anhand der aktuellen Uhrzeit (AKT) mit der Master-Uhr (MUhr) zu synchronisieren, weiterhin ist der Sender (S) ausgestaltet das Broadcast-Telegramms (T_{BC}) an die Empfänger (E1,E2) zu senden,
die Empfänger (E1,E2) sind ausgestaltet, von dem Uhrzeitmaster (UM) mittels eines Anfrage-Telegramms (T_{A1},T_{A1}) die aktuelle Uhrzeit (AKT) anzufordern,
der Uhrzeitmaster (UM) ist ausgestaltet, als Antwort auf die Anfrage-Telegramme (T_{A1},T_{A1}), die aktuelle Uhrzeit (AKT) mit einem Uhrzeit-Telegramm (Tₐₖₜ) an die Empfänger (E1,E2) zu senden,
**dadurch gekennzeichnet, dass**
die Empfänger (E1,E2) derart ausgestaltet sind, dass mit dem Aussenden des Anfrage-Telegramms (T_{A1},T_{A2}) ein Zeitzähler (Z1,Z2) gestartet wird und bei Eintreffen des angeforderten Uhrzeit-Telegramms (Tₐₖₜ) der Zeitzähler (Z1,Z2) gestoppt wird und somit eine Verzögerungszeit (D1,D2) ermittelt wird, wenn das angefragte Uhrzeit-Telegramm (Tₐₖₜ) in dem Empfänger (E1,E2) eintrifft,
weiterhin sind die Empfänger (E1,E2) ausgestaltet eine Empfänger-Uhr (EUhr1, EUhr2) mit der Summe aus der aktuellen Uhrzeit (AKT) der Master-Uhr (MUhr) und der ermittelten Verzögerungszeit (D1,D2)) einzustellen bzw. zu synchronisieren, dabei ist der Sender (S) weiterhin dazu ausgestaltet, mit dem Aussenden des Broadcast-Telegramms (T_{BC}) diesem einen Sende-Zeitpunkt (t_{send}) hinzu zu fügen, und
die Empfänger (E1, E2) sind dazu ausgestaltet mit dem Empfang des Broadcast-Telegramms (T_{BC}) einen Empfangs-Zeitpunkt (t_{re-ceive}) zu generieren,
weiterhin weisen die Empfänger (E1,E2) ein Mittel (M1,M2) auf, welches ausgestaltet ist, die sicherheitsrelevanten Daten (Safe_{Data}) als gültige Daten zu übernehmen, wenn eine Differenz zwischen dem Empfangs-Zeitpunkt (t_{receive}) und dem Sende-Zeitpunkt (t_{send}) einen vorgebbaren Grenzwert (ΔD) nicht überschritten hat.

6. Automatisierungssystem (1) nach Anspruch 5, wobei in den Empfängern (E1,E2) ein Identifikationsmittel (IM1, IM2) integriert ist, welches ausgestaltet ist, dem Anfrage-Telegramm (T_{A1},T_{A1}) ein Authentizitätscode (A1,A2) zuzufügen, welcher vom Uhrzeitmaster (UM) in das gesendete Uhrzeit-Telegramm (Tₐₖₜ) mit übernommen wird, und das Identifikationsmittel (IM1, IM2) ausgestaltet ist, anhand des Authentizitätscodes (A1,A2)zu prüfen, ob das empfangene Uhrzeit-Telegramm (Tₐₖₜ) zu dem entsprechenden Anfrage-Telegramm (T_{A1},T_{A1}) gehört.

7. Automatisierungssystem (1) nach Anspruch 5 oder 6, ausgestaltet, mit einem Notaus-Kreis (NK), wodurch sich die Mehrzahl an Empfängern (E1,E2) mittels des Senders (S) und einem Broadcast-Telegramm (T_{BC}) in einen sicheren Zustand versetzen lassen.

8. Automatisierungssystem (1) nach Anspruch 7, ausgestaltet zur Abschaltung von mobilen Automatisierungseinheiten, welche über eine sichere Funkstrecke betrieben werden.
